# EUROPÄISCHE PATENTSCHRIFT

(11) **EP 3 251 921 B1**
(45) Veröffentlichungstag und Bekanntmachung des Hinweises auf die Patenterteilung: **11.12.2019**
(21) Anmeldenummer: 16172789.6
(22) Anmeldetag: 03.06.2016
(51) Int. Cl.: B62D 59/04, B62D 13/00, B62D 53/00

(54) **GLEISLOSER ROUTENZUG**
TRACKLESS ROUTE TRAIN
CHARIOT TRACTEUR SANS RAIL

(43) Veröffentlichungstag der Anmeldung: 06.12.2017
(73) Patentinhaber: Helmut-Schmidt-Universität/ Universität der Bundeswehr Hamburg, 22043 Hamburg (DE); Hamburg-Innovation GmbH, 21079 Hamburg (DE)
(72) Erfinder: Ulrich, Stephan, 22147 Hamburg (DE); Bruns, Rainer, 22395 Hamburg (DE); Krivenkov, Konstantin, 21033 Hamburg (DE)
(74) Vertreter: RGTH

(56) Entgegenhaltungen:
- EP-A2- 2 192 024
- EP-A2- 2 944 549
- WO-A1-2013/110196
- DE-A1-102014 100 865
- DE-B- 1 079 469
- US-A1- 2015 344 086

## Beschreibung

Die vorliegende Erfindung betrifft einen gleislosen Routenzug, welcher ein Zugmodul, mindestens ein Transportmodul und mindestens zwei Achsmodule aufweist.

### Stand der Technik

Gleislose Routenzüge können insbesondere als Flurförderzeuge für einen innerbetrieblichen Transport eingesetzt werden. Ein derartiger gleisloser Routenzug ist beispielsweise aus der EP 2 944 549 A2 bekannt. Der dort beschriebene Routenzug weist mehrere hintereinander angeordnete Transportmodule auf, welche mittels eines Zugmoduls gezogen werden. Zwischen dem Zugmodul und dem in Fahrtrichtung ersten Transportmodul und zwischen den danach folgenden Transportmodulen ist jeweils ein Achsmodul angeordnet. Die Achsmodule weisen jeweils eine Radachse auf, an welcher jeweils zwei Räder angeordnet sind. Zum Verbinden der Achsmodule mit den Transportmodulen bzw. mit dem Zugmodul sind an den Achsmodulen jeweils zwei mit einem Transportmodul oder Zugmodul verbundene Kragarme angeordnet. Diese Kragarme sind ungefähr mittig entlang der Längserstreckung der Radachse miteinander über ein Drehgelenk verbunden, so dass die Kragarme relativ zueinander verdrehbar sind. Durch die relative Verdrehbarkeit der Kragarme zueinander werden bei einer Kurvenfahrt des Routenzugs die Transportmodule relativ zu der Radachse verschwenkt, wobei die Räder selber in ihrer Position relativ zu der Radachse verbleiben.

Diese Drehgelenke übertragen jedoch alle während des Betriebs des Routenzugs auf die Transportmodule wirkenden Kräfte, wie die Gewichtskraft der Last, das Eigengewicht der Transportmodule, die Massenträgheitskräfte beim Beschleunigen und Abbremsen sowie die Fliehkräfte bei Kurvenfahrten, von den Transportmodulen auf die Radachse. Die Drehgelenke zwischen den Kragarmen und der Radachse müssen daher sehr hohen Belastungen standhalten können und darüber hinaus eine hohe Steifigkeit aufweisen. Die hohe Steifigkeit ist wichtig, damit während der Fahrt des Routenzuges keine störenden Wankschwingungen entstehen. Bei einer nicht ausreichend steifen Verbindung zwischen den Transportmodulen und der Radachse bzw. den Achsmodulen kann es bei ungünstigen Beladungs- und Bodenverhältnissen zum Aufsetzen der äußeren Ecken eines Transportmoduls auf dem Boden kommen. Eine ausreichend feste und steife konstruktive Auslegung und Gestaltung der Drehgelenke und der Kragarme ist technisch zwar möglich, sie ist jedoch sehr aufwendig und führt daher zu hohen Herstellungskosten.

Dokument DE1079469 A wird als nächstliegender Stand der Technik angesehen und zeigt einen Wagenzug, bestehend aus Zugmaschine und mindestens einem Anhänger, wobei für die Anhängerräder eine an sich bekannte Lenkung vorgesehen ist, durch welche die Räder auch in Kurven in der Spur der Treibräder der Zugmaschine geführt werden, wobei die Treibräder der Zugmaschine und alle Anhängerräder in an sich bekannter Weise je Achse über ein Differentialgetriebe antreibbar sind, wobei das Differentialgetriebe jeder hinter dem Antriebsaggregat der Zugmaschine liegenden Achse an eine vom Antriebsaggregat ausgehende Gelenkwelle über ein einfaches Verzweigungsgetriebe angeschlossen ist.

Die DE 10 2014 100 865 A1 offenbart einen Routenzuganhänger mit einem Fahrgestell und einer in Wirkverbindung mit Transporteinheiten bringbaren Transportvorrichtung, wobei das Fahrgestell zwei in Fahrzeuglängsrichtung voneinander beabstandete Achsrahmen aufweist. Die Transportvorrichtung umfasst einen Längsträger und zwei dazu abgewinkelte Stege, welche zur Aufnahme von durch die Transporteinheiten erzeugten Kräften ausgebildet sind und die Achsrahmen miteinander kraftübertragend verbinden.

Die US 2015/0344086 A1 offenbart einen Transportwagen umfassend einen Mutterwagen mit einem Chassis und einen Tochterwagen. Der Tochterwagen wird von einem Hebemechanismus des Mutterwagens getragen.

### Darstellung der Erfindung: Aufgabe, Lösung, Vorteile

Es ist daher die Aufgabe der vorliegenden Erfindung, einen gleislosen Routenzug zur Verfügung zu stellen, welcher sich durch eine vereinfachte konstruktive Auslegung und Gestaltung auszeichnet bei gleichzeitigem Erreichen einer festen und ausreichend steifen Verbindung zwischen den Achsmodulen und den Transportmodulen.

Diese Aufgabe wird mit den Merkmalen des unabhängigen Anspruchs gelöst. Vorteilhafte Weiterbildungen der Erfindung sind in den abhängigen Ansprüchen angegeben.

Die Erfindung zeichnet sich dadurch aus, dass jedes Achsmodul einen starr ausgebildeten Achskörper aufweist, an welchem eine erste Aufnahmevorrichtung in Form einer Starraufnahme des Zugmoduls oder eines Transportmoduls ausgebildet ist und an welchem eine zweite Aufnahmevorrichtung zur gelenkigen Anbindung eines Transportmoduls ausgebildet ist, wobei an dem Achskörper mindestens zwei Räder derart gelagert sind, dass die Räder jeweils um eine vertikal zur Bodenebene des Achskörpers ausgebildete Drehachse drehbar sind, wobei an den Achsmodulen mindestens eine elektronische Lenksteuerungsvorrichtung vorgesehen ist, mittels welcher der aktuelle Bewegungszustand des Achsmoduls und hieraus die vom Lenkantrieb einzustellenden Lenkwinkel der Räder bestimmbar sind, und wobei die Lenksteuerungsvorrichtung eine Regelungsvorrichtung beinhaltet, mit der ein Lenk- oder mehrere Lenkantriebe des Achsmoduls so geregelt wird/werden, dass sich die zuvor bestimmten Lenkwinkel einstellen.

Erfindungsgemäß ist es nunmehr vorgesehen, dass an dem Achsmodul, insbesondere dem Achskörper des Achsmoduls, keine gelenkige Verbindung zwischen dem Zugmodul und dem in Fahrtrichtung ersten Transportmodul bzw. zwischen zwei hintereinander angeordneten Transportmodulen mehr vorgesehen ist. Damit sind auch nicht mehr beide an das Achsmodul bzw. den Achskörper des Achsmoduls angebundene Transportmodule relativ zu dem Achskörper drehbar bzw. verschwenkbar. Stattdessen ist es nunmehr vorgesehen, dass an dem Achskörper des Achsmoduls zwei Aufnahmevorrichtungen vorgesehen sind, wobei die erste dieser zwei Aufnahmevorrichtungen derart ausgebildet ist, dass das an dem Achskörper anzuordnende Transportmodul starr an dem Achskörper befestigt ist und damit eine verdrehfeste Verbindung zwischen dem Achskörper und dem Transportmodul ausgebildet ist. Diese erste Aufnahmevorrichtung ist vorzugsweise an der in Fahrtrichtung vorderen Längsseite des Achskörpers ausgebildet. Der Kragarm des Zugmoduls kann auch als Transportmodul ausgebildet sein. Eine Starraufnahme bedeutet hierbei, dass die Anbindung zwischen dem Achskörper und damit der ersten Aufnahmevorrichtung und dem Zugmodul bzw. Transportmodul starr bzw. fest ist. Das Zugmodul bzw. ein Transportmodul kann dabei über eine lösbare Verbindung mit der ersten Aufnahmevorrichtung verbunden sein, so dass ein Auswechseln des an der ersten Aufnahmevorrichtung angeordneten Zugmoduls bzw. Transportmoduls schnell und leicht erfolgen kann. Die lösbare Verbindung kann beispielsweise mittels einer Schraubverbindung ausgebildet sein. Die Anbindung des Zugmoduls an der ersten Aufnahmevorrichtung des in Fahrtrichtung ersten Achsmoduls erfolgt über einen Kragarm des Zugmoduls, so dass dieser Kragarm drehfest an dem Achskörper befestigt ist. Zusätzlich zu der ersten Aufnahmevorrichtung ist an dem Achskörper eine zweite Aufnahmevorrichtung ausgebildet. Diese zweite Aufnahmevorrichtung ist derart ausgebildet, dass im Gegensatz zu der ersten Aufnahmevorrichtung eine gelenkige Anbindung eines Transportmoduls an den Achskörper ermöglicht ist. Eine gelenkige Anbindung bedeutet, dass das an die zweite Aufnahmevorrichtung bzw. über die zweite Aufnahmevorrichtung an den Achskörper angebundene Transportmodul relativ zu dem Achskörper verschwenkt bzw. verdreht werden kann, wenn der Routenzug eine Kurvenbahn fährt. Die zweite Aufnahmevorrichtung kann beispielsweise in Form einer Anhängerkupplung ausgebildet sein. Die gelenkige Anbindung kann durch ein an der zweiten Aufnahmevorrichtung vorgesehenes Kugelgelenk ausgebildet sein, über welches der Achskörper mit dem Transportmodul bzw. einem Kragarm des Transportmoduls verbunden werden kann. Durch die gelenkige Anbindung können Relativverdrehungen zwischen dem Transportmodul und dem Achsmodul bzw. dem Achskörper des Achsmoduls um alle drei Raumachsen ermöglicht werden, wodurch erreicht werden kann, dass der Routenzug Bodenunebenheiten ausgleichen kann und über Fahrbahnen mit unterschiedlich geneigten Streckenabschnitten fahren kann. Alternativ zu der Ausbildung der gelenkigen Anbindung durch ein Kugelgelenk kann es auch vorgesehen sein, dass beispielsweise eine Bolzenkupplung vorgesehen ist. Eine derartige Bolzenkupplung kann kleine Drehbewegungen um die beiden zum Bolzen senkrecht stehenden Drehachsen ermöglichen. An dem Achskörper sind ferner mindestens zwei Räder derart gelagert, dass die Räder jeweils um eine vertikal zur Längsachse des Achskörpers ausgebildete Drehachse drehbar sind. Bei dem erfindungsgemäßen Routenzug ist es somit vorgesehen, dass die an dem Achskörper angeordneten Räder relativ zu dem Achskörper verdreht bzw. verschwenkt werden können, um einen Lenkwinkel einstellen zu können. Dadurch ist es möglich, dass die Gesamtlänge des Routenzuges bei unveränderten Abmessungen der Räder und der Transportmodule sowie einem gleich bleibenden minimalen Kurvenradius des Routenzuges verringert werden kann. Dies ist dadurch erreichbar, dass sich die Räder auf der Kurveninnenseite platzsparender in die Freiräume zwischen den Transportmodulen durch ihre Drehbarkeit einfügen können als dies bei Ausgestaltungen der Fall ist, bei welchen die Räder drehfest an dem Achskörper befestigt sind und damit nicht relativ zu dem Achskörper verdreht werden können. Durch die mögliche Verkürzung der Länge des Routenzuges kann erreicht werden, dass der Routenzugfahrer nur kurze Wege zum Entladen der Last von einem Transportmodul am Zielort der jeweiligen Last zurücklegen muss. Durch die erfindungsgemäße Ausgestaltung ist es nunmehr nicht mehr notwendig, Drehgelenke vorzusehen und damit eine feste und steife konstruktive Auslegung und Gestaltung der Drehgelenke auszubilden. Wegen der starren Anbindung des Transportmoduls an jeweils ein Achsmodul kann eine besonders steife Verbindung zwischen den Transportmodulen und den Achsmodulen erreicht werden, so dass störende Wankschwingungen bei der Fahrt des Routenzuges verhindert werden können und zudem auch ein Aufsetzen der äußeren Ecken der Transportmodule auf dem Boden selbst bei ungünstigen Beladungs- und Bodenverhältnissen vermieden werden kann.

Die Drehachse des Rades kann außerhalb oder innerhalb einer Radaufstandsfläche des Rades ausgebildet sein. Die Radaufstandsfläche des Rades ist die Fläche, mit welcher das Rad auf dem Fahrboden bzw. der Bodenfläche, auf welcher das Rad abrollt, steht bzw. fährt. Ist die Drehachse außerhalb dieser Radaufstandsfläche angeordnet, so ist die Lotrechte der Radaufstandsfläche beabstandet zu der Drehachse, so dass das Rad beabstandet zu der Drehachse um die Drehachse verschwenkbar ist. Ist die Drehachse außerhalb der Radaufstandsfläche angeordnet, so kann die Reibfläche des Rades reduziert werden, wodurch der Verschleiß des Rades reduziert werden. Zudem kann bei Stillstand des Routenzuges eine leichtere Lenkung des Rades erreicht werden. Ist die Drehachse innerhalb einer Radaufstandsfläche des Rades angeordnet, so fällt die Lotsenkrechte der Radaufstandsfläche zusammen mit der Drehachse, so dass die Drehachse innerhalb des Rades liegt, wodurch diese durch das Rad und die Radaufstandsfläche hindurchgeht. Ist die Drehachse innerhalb der Radaufstandsfläche des Rades angeordnet, so kann erreicht werden, dass zusätzliche Rollwiderstände beim Überfahren von Hindernissen sich kaum auf das Lenken des Rades auswirken.

Die drehbare Aufhängung der Räder an dem Achskörper kann beispielsweise dadurch ausgebildet sein, dass die Räder jeweils an einem Achsschenkel angeordnet sind, welcher um die Drehachse drehbar an dem Achskörper gelagert ist. Die Räder sind dabei vorzugsweise jeweils drehfest an den Achsschenkeln angeordnet, wohingegen die Achsschenkel selber drehbar an dem Achskörper gelagert sind. Die Drehachse verläuft dabei durch den Achskörper bzw. die Achsschenkel und ist dadurch beabstandet zu den Rädern bzw. der Lotrechten der Radaufstandsfläche der Räder, so dass hierbei die Drehachse der Räder außerhalb von der jeweiligen Radaufstandsfläche angeordnet ist.

Die an einem Achskörper gelagerten Achsschenkel können einzeln mittels eines Lenkantriebs antreibbar sein oder die an einem Achskörper gelagerten Achsschenkel können über eine Verbindungsstange miteinander gekoppelt sein und gemeinsam mittels eines Lenkantriebs antreibbar sein. Ist jedem Achsschenkel ein eigener Lenkantrieb zugeordnet, so können die Achsschenkel einzeln angetrieben und angesteuert werden, so dass auch eine Verschwenk- bzw. Verdrehbewegung der Achsschenkel unabhängig voneinander und damit auch eine Verschwenk- bzw. Verdrehbewegung der Räder eines Achsmoduls unabhängig voneinander erfolgen kann. Alternativ ist es möglich, dass die an einem Achskörper angeordneten Achsschenkel über eine Verbindungsstange, beispielsweise einer Koppelstange, miteinander verbunden sind. Bei dieser Ausgestaltung wird die Verbindungsstange angetrieben und dadurch in eine Bewegung versetzt, welche von der Verbindungstange auf die Achsschenkel derart übertragen wird, dass die Achsschenkel eine Verdreh- bzw. Verschwenkbewegung ausführen. Bei dieser Ausgestaltung werden die Achsschenkel eines Achsmoduls und damit die Räder eines Achsmoduls gemeinsam mittels nur eines Lenkantriebs angetrieben. Die Verbindungsstange kann beispielsweise mittels eines Zylinders, insbesondere eines Hydraulikzylinders, angetrieben werden, wobei die Verbindungsstange dadurch translatorisch bewegt werden kann, wobei diese translatorische Bewegung an eine Kurbel über ein Drehgelenk übertragen werden kann, wobei die Kurbel mit einem entsprechenden Achsschenkel fest verbunden sein kann, so dass die translatorische Bewegung der Verbindungsstange in eine rotatorische Bewegung der Achsschenkel übertragen bzw. umgewandelt werden kann.

Alternativ zu den Achsschenkeln kann es vorgesehen sein, dass die Räder jeweils in einer Einzeldrehschemelaufnahme oder in einer Bockrollenaufnahme angeordnet sind, welche an dem Achskörper drehbar gelagert sind. Bei einer derartigen Ausgestaltung verläuft die Drehachse für die Lenkbewegung des Rades vorzugsweise durch den Mittelpunkt der Radaufstandsfläche, so dass die Drehachse hier innerhalb der Radaufstandsfläche des Rades angeordnet ist. In Abhängigkeit der Ausgestaltung der jeweiligen Einzeldrehschemelaufnahmen oder der jeweiligen Bockrollenaufnahmen kann es jedoch auch vorgesehen sein, dass die Drehachse leicht seitlich versetzt zu der Radaufstandsfläche des Rades verläuft. Um eine Drehbewegung der Räder um ihre Drehachse und damit relativ zu dem Achskörper erreichen zu können, kann an den Einzeldrehschemelaufnahmen oder Bockrollenaufnahmen jeweils eine Riemenscheibe angeordnet sein, welche über einen Motor angetrieben werden kann, indem ein Zugmittel, beispielsweise ein Riementrieb, zwischen der Riemenscheibe und dem Motor gespannt ist.

Die an einem Achskörper gelagerten Einzeldrehschemelaufnahmen oder Bockrollenaufnahmen können einzeln mittels eines Lenkantriebs oder gemeinsam mittels eines Lenkantriebs antreibbar sein.

Der Lenkantrieb sowohl der Achsschenkel als auch der Einzeldrehschemelaufnahmen oder Bockrollenaufnahmen kann elektrisch, hydraulisch oder pneumatisch ausgebildet sein. Beispielsweise kann der Lenkantrieb einen Elektromotor, einen hydraulischen oder pneumatischen Motor oder einen elektromagnetischen Linearantrieb aufweisen. Ferner kann der Lenkantrieb einen Leistungs-steller aufweisen, welcher beispielsweise in Form einer Leistungselektronik für einen Elektromotor oder einen elektromagnetischen Linearantrieb oder in Form eines Ventils für hydraulische oder pneumatische Motoren ausgebildet sein kann. Weiter kann der Lenkantrieb ein Getriebe zur Übertragung der Leistung des Motors auf die Räder bzw. die Achsschenkel oder die Einzeldrehsche-melaufnahmen oder die Bockrollenaufnahmen aufweisen. Ein entsprechendes Getriebe kann dazu dienen, die von einem Motor erzeugte mechanische Bewegung und Kraft an die Radaufhängung und damit die Räder zu übertragen und in Größe und Form an deren Bedürfnisse anzupassen. So kann es beispielsweise vorgesehen sein, dass die Drehbewegung eines Elektromotors mit Hilfe eines Spindeltriebes oder Zahnstangentriebes in eine Translationsbewegung und damit in eine lineare Bewegung umgewandelt wird und anschließend über einen Kurbelbetrieb an die Radaufhängungen übertragen und wieder in Drehbewegungen zurückgewandelt wird. Zur Erzeugung einer Translationsbewegung können hydraulische Zylinder verwendet werden. Kurbeltriebe eignen sich insbesondere für die Erzeugung der Lenkbewegungen, wenn wenn die Räder eines Achsmoduls gemeinsam mittels nur eines Lenkantriebs angetrieben werden. Ist für jedes Rad eines Achsmoduls ein eigener Lenkantrieb vorgesehen, so ist es vorteilhaft, die Drehbewegung des Motors direkt mit Hilfe eines Zahnrad- oder Zugmittelgetriebes auf die zugehörige Radaufhängung und damit die Räder zu übertragen. Beispielsweise kann die Drehbewegung der Elektromotoren mit Hilfe von Zahnriementrieben von den Motorwellen auf die Drehachsen der Radaufhängungen übertragen und dabei gleichzeitig untersetzt werden. Alternativ zu einem Zahnriementrieb kann beispielsweise auch ein Zahnradgetriebe verwendet werden.

Um den Fahrbetrieb des Routenzuges und damit die Bewegung des Routenzuges insbesondere bei Kurvenfahrten besonders gut steuern bzw. regeln zu können, ist es bevorzugt vorgesehen, dass an mindestens einem der Achsmodule mindestens ein Sensor angeordnet ist, mittels welchem fahrdynamische Daten des Routenzuges kontinuierlich messbar sind. Hierdurch ist eine kontinuierliche Überwachung und Steuerung des Routenzuges während des Fahrbetriebes des Routenzuges möglich, um beispielsweise sich aufbauende Wankschwingungen der einzelnen Transportmodule frühzeitig erkennen und unterbinden zu können.

Ferner ist vorgesehen, dass an den Achsmodulen mindestens eine elektronische Lenksteuerungsvorrichtung vorgesehen ist, mittels welcher der aktuelle Bewegungszustand der Achsmodule und hieraus die vom Lenkantrieb einzustellender Lenkwinkel der Räder bestimmbar sind. Die elektronische Lenksteuerungsvorrichtung kann hierfür beispielsweise die von einem Sensor kontinuierlich gemessenen fahrdynamischen Daten verwenden. Die Lenksteuervorrichtung beinhaltet darüber hinaus eine Regelungsvorrichtung mit der ein Lenk- oder mehrere Lenkantriebe des Achsmoduls so geregelt wird/werden, dass sich die zuvor bestimmten Lenkwinkel einstellen.

Weiter kann es vorgesehen sein, dass an mindestens einem der Achsmodule eine Energieversorgung angeordnet ist, um beispielsweise Energie für den Betrieb einer elektronischen Lenksteuerungsvorrichtung, eines Sensors und/oder eines Motors eines Lenkantriebs zur Verfügung stellen zu können.

Die Energieversorgung kann beispielsweise dadurch erfolgen, dass an mindestens einem der Achsmodule mindestens eine über eine elektrische Leitung mit dem Zugmodul verbindbare Anschlussvorrichtung zur Energieversorgung angeordnet ist. Die benötigte Energie kann dabei von dem Zugmodul in elektrischer, pneumatischer oder hydraulischer Form bereitgestellt werden und über elektrische Leitungen, Schläuche oder Rohre hin zu der entsprechenden Anschlussvorrichtung an dem Achsmodul übertragen werden.

Weiter kann es auch vorgesehen sein, dass an mindestens einem der Achsmodule mindestens eine Energiespeichervorrichtung vorgesehen ist. Die Energiespeichervorrichtung kann beispielsweise eine Batterie, ein Akkumulator und/oder ein Gasdruckspeicher sein. Bei einer derartigen Ausgestaltung kann die benötigte Energie aus der Drehbewegung der Räder zum Beispiel mittels eines elektrischen Generators oder mit Hilfe einer hydraulischen oder pneumatischen Pumpe bereitgestellt werden und in der Energiespeichervorrichtung gespeichert werden. Dadurch kann gewährleistet werden, dass auch bei einem stillstehenden Routenzug zumindest vorübergehend Energie an den einzelnen Achsmodulen zur Verfügung steht.

An mindestens einem der Achsmodule kann weiter mindestens eine Hubvorrichtung zum Anheben und Senken eines mit dem Achsmodul verbundenen Transportmoduls angeordnet sein. Mittels der Hubvorrichtung kann bei Bedarf das an einem Achsmodul angeordnete Transportmodul zusammen mit seiner Ladung angehoben oder auch abgesenkt werden, wodurch ein Beladen und/oder Entladen der Transportmodule erleichtert werden kann. Die Hubvor-richtung ist vorzugsweise im Bereich der ersten und/oder der zweiten Aufnahmevorrichtung angeordnet.

Weiter kann es vorgesehen sein, dass an mindestens einem der Achsmodule mindestens ein akustischer und/oder optischer Signalgeber angeordnet ist. Mittels eines akustischen und/oder optischen Signalgebers kann beispielsweise dem Fahrer des Routenzuges eine Fehlfunktion bzw. ein Ausfall zum Beispiel des bzw. der Lenkantriebe und damit der Lenkung des gesamten Routenzuges angezeigt werden. Ist an jedem Achsmodul eines derartigen Routenzuges ein entsprechender Signalgeber angeordnet, so kann der Fahrer schnell und auf einfache Art und Weise erkennen, welcher Lenkantrieb an welchem Achsmodul nicht mehr vollständig funktionsfähig ist.

An mindestens einem der Achsmodule kann ferner mindestens eine elektronische Anzeigeeinrichtung angeordnet sein. Über diese elektronische Anzeigeeinrichtung, beispielsweise in Form eines Displays, können dem Fahrer des Routenzuges oder auch anderen Personen Informationen angezeigt werden. Insbesondere können hiermit Anweisungen zum Be- und Entladen der Transportmodule übermittelt werden. Es können aber beispielsweise auch Fehlermeldungen oder Hinweise zu erforderlichen Wartungs- und/oder Instandhaltungsmaßnahmen über die Anzeigeeinrichtung angezeigt werden.

Ferner kann an mindestens einem der Achsmodule mindestens eine Eingabevorrichtung angeordnet sein. Über die Eingabevorrichtung können Daten, Informationen, Rückmeldungen usw. durch den Fahrer oder durch eine andere Person eingegeben werden, um diese Daten bzw. Informationen zu speichern und zu einem späteren Zeitpunkt je nach Bedarf abrufen zu können. Eine derartige Eingabevorrichtung kann beispielsweise eine Tastatur, ein Touchscreen in Kombination mit einer elektronischen Anzeigeeinrichtung, ein Mikrofon für eine Spracheingabe und/oder eine Kamera zur Gestenerkennung sein.

Weiter kann an mindestens einem der Achsmodule eine Betriebsdatenverarbeitungseinheit angeordnet sein. Eine derartige Betriebsdatenverarbeitungseinheit kann dazu ausgebildet sein, Betriebsdaten zu erfassen, auszuwerten und/oder zu speichern. Zur Erfassung der Betriebsdaten des Routenzuges können kontinuierlich oder zu diskreten Zeitpunkten Betriebsgrößen, wie beispielsweise die Fahrgeschwindigkeit, die Lenkwinkel, die Lastmasse, Beschleunigung bzw. Stöße usw., mit für den Lenkantrieb oder eine Fahrantriebsvorrichtung vorhandenen Sensoren sowie mit zusätzlichen Sensoren gemessen werden. Die gemessenen Betriebsgrößen können in einer elektronischen Auswertungseinheit, wie beispielsweise einem Mikro-Controller, ausgewertet und zu einer Information und zu Kennzahlen verdichtet werden. Die daraus ermittelten Daten können in einer elektronischen Speichervorrichtung lokal gespeichert und/oder zu einer zentralen Auswerte- und/oder Speicherungsvorrichtung weitergeleitet werden. Die Datenübertragung kann drahtlos per Funk zum Beispiel über WLAN erfolgen. Alternativ kann die Datenübertragung zwischen den Achsmodulen und zwischen dem Zugmodul und den Achsmodulen auch über eine Datenleitung erfolgen. Die ermittelten Betriebsdaten können zum Beispiel für eine zustandsabhängige Wartung und Instandhaltung des Routenzuges oder für die Optimierung der logistischen Prozesse verwendet werden.

Um den Aufbau des Routenzuges weiter vereinfachen zu können und um insbesondere verhindern zu können, dass die aufzubringenden Bremskräfte des Routenzuges nicht über eine Kette des Routenzugsystems geleitet werden muss, kann es vorgesehen sein, dass an mindestens einem der Achsmodule eine Bremsvorrichtung angeordnet ist, wobei jedem an dem Achsmodul angeordneten Rad eine eigene Bremseinrichtung der Bremsvorrichtung zugeordnet sein kann.

Um die von dem Zugmodul auf die einzelnen Transportmodule zu übertragende Zugkraft reduzieren zu können, kann es bevorzugt vorgesehen sein, dass mindestens eines der Achsmodule des Routenzuges eine Fahrantriebseinrichtung aufweist. Eine Fahrantriebseinrichtung weist vorzugsweise einen Motor und ein Getriebe auf, das die mechanische Leistung des Motors hinsichtlich der Drehzahl und des Momentes anpassen und an die Räder des Achsmoduls übertragen kann. Der Motor kann ein elektrischer, ein hydraulischer oder ein pneumatischer Motor sein.

Bevorzugt ist es dabei vorgesehen, dass jedem Rad eines Achsmoduls eine eigene Fahrantriebseinrichtung zugeordnet ist. Bei einer derartigen Ausgestaltung treibt jede Fahrantriebseinrichtung jeweils nur ein Rad an. Hierfür können beispielsweise Radnabenmotoren eingesetzt sein. Ist hingegen pro Achsmodul nur eine Fahrantriebseinrichtung für die an dem Achsmodul angeordneten Räder vorgesehen, so wird die Antriebsleistung des Motors der Fahrantriebs-einrichtung auf die Räder durch ein Differentialgetriebe aufgeteilt.

Eine Energieversorgung der Fahrantriebseinrichtung bzw. der Fahrantriebseinrichtungen kann zentral von dem Zugmodul aus über Energieleitungen erfolgen. Alternativ kann es auch vorgesehen sein, dass jedem Achsmodul eine eigene Energiespeichervorrichtung zugeordnet ist, welche für die Energieversorgung der Fahrantriebseinrichtung dient.

Die Fahrantriebseinrichtung kann beispielsweise mittels einer elektronischen Fahrsteuerungsvorrichtung regelbar und/oder steuerbar sein. Die Fahrsteuerungsvorrichtungen der einzelnen Achsmodule können durch eine übergeordnete Fahrsteuerung, die sich beispielsweise an dem Zugmodul befinden kann, koordiniert werden. Hierzu ist eine Daten- und/oder Signalübertragung zwischen den Achsmodulen und dem Zugmodul erforderlich. Anstelle der zentralen Koordinierung der einzelnen Fahrsteuerungsvorrichtungen ist auch eine dezentrale und damit lokale Steuerung der Fahrantriebseinrichtungen der einzelnen Achsmodule möglich. Hierzu kann die von der jeweiligen Fahrantriebseinrichtung zu erzeugende Vortriebskraft in Abhängigkeit von der vom voranfahrenden Transportmodul bzw. Zugmodul eingeleiteten Zugkraft eingestellt werden. Die eingeleitete Zugkraft kann dabei laufend gemessen werden und mit Hilfe der Regelung in der Fahrsteuerungsvorrichtung und der Fahrantriebseinrichtung kann die Vortriebskraft so eingestellt werden, dass die eingeleitete Zugkraft um einen gewissen Faktor verringert wird bzw. auf einen Maximalwert begrenzt wird.

### Kurze Beschreibung der Zeichnungen

Weitere, die Erfindung verbessernde Maßnahmen werden nachstehend gemeinsam mit der Beschreibung bevorzugter Ausführungsbeispiele der Erfindung anhand der Figuren näher dargestellt.

Es zeigen:
- Fig. 1: eine schematische Darstellung eines gleislosen Routenzuges gemäß der Erfindung,
- Fig. 2: eine Darstellung einer Aneinanderreihung von Achsmodulen und Transportmodulen in verschiedenen Ausgestaltungen für einen wie in Fig. 1 gezeigten gleislosen Routenzug,
- Fig. 3: eine schematische Darstellung eines Achsmoduls gemäß einer Ausgestaltung der Erfindung für einen wie Fig. 1 gezeigten gleislosen Routenzug,
- Fig. 4: eine schematische Darstellung einer Einzeldrehschemelaufnahme mit einem daran angeordneten Rad gemäß der Erfindung,
- Fig. 5: eine schematische Darstellung einer Bockrollenaufnahme mit einem daran angeordneten Rad gemäß der Erfindung,
- Fig. 6: eine schematische Darstellung eines Achsmoduls gemäß einer weiteren Ausgestaltung der Erfindung für einen wie Fig. 1 gezeigten gleislosen Routenzug,
- Fig. 7: eine weitere Darstellung des in Fig. 6 gezeigten Achsmoduls während einer Lenkbewegung,
- Fig. 8: eine schematische Darstellung eines Achsmoduls gemäß einer weiteren Ausgestaltung der Erfindung für einen wie Fig. 1 gezeigten gleislosen Routenzug,
- Fig. 9: eine schematische Darstellung eines Achsmoduls gemäß einer weiteren Ausgestaltung der Erfindung für einen wie Fig. 1 gezeigten gleislosen Routenzug,
- Fig. 10: eine schematische Darstellung eines Achsmoduls gemäß einer weiteren Ausgestaltung der Erfindung für einen wie Fig. 1 gezeigten gleislosen Routenzug,
- Fig. 11: eine schematische Darstellung eines Achsmoduls gemäß einer weiteren Ausgestaltung der Erfindung für einen wie Fig. 1 gezeigten gleislosen Routenzug, und
- Fig. 12: eine schematische Darstellung einer Einzeldrehschemelaufnahme mit einer daran angeordneten Fahrantriebseinrichtung und einer daran angeordneten Bremsvorrichtung gemäß der Erfindung.

### Bevorzugte Ausführungsformen der Erfindung

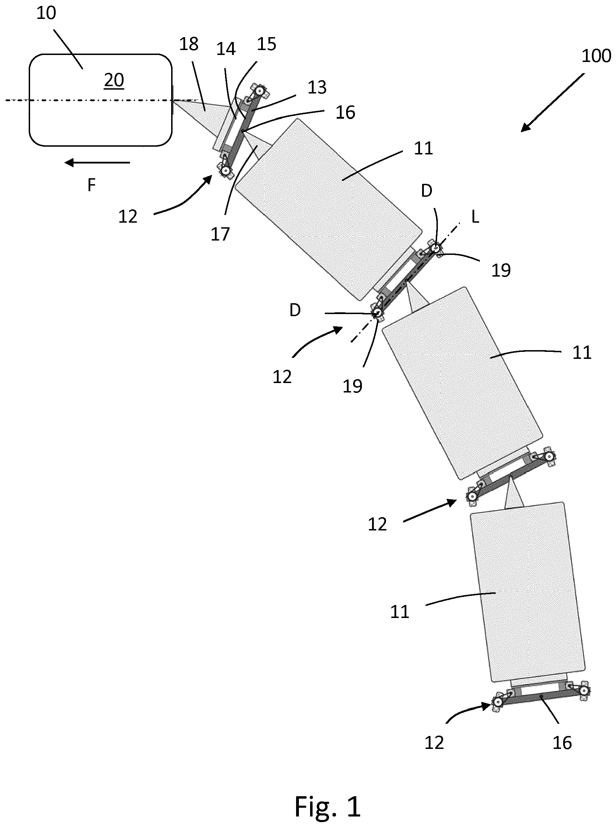

Fig. 1 zeigt schematisch einen gleislosen Routenzug 100 gemäß der Erfindung. Der gleislose Routenzug weist ein Zugmodul 10, mehrere hintereinander angeordnete Transportmodule 11 und mehrere Achsmodule 12 auf, wobei jeweils ein Achsmodul 12 zwischen zwei hintereinander angeordneten Transportmodulen 11 und zwischen dem Zugmodul 10 und dem in Fahrtrichtung F ersten Transportmodul 11 angeordnet ist. Ferner ist auch an dem in Fahrtrichtung F letzten Transportmodul 11 ein Achsmodul 12 als Abschluss des Routenzuges 100 angeordnet.

Jedes Achsmodul 12 weist einen starr ausgebildeten Achskörper 13 auf, welcher in Form einer Stange bzw. eines Balkens ausgebildet ist.

An jedem Achskörper 13 ist eine erste Aufnahmevorrichtung 14 in Form einer Starraufnahme des Zugmoduls 10 oder eines Transportmoduls 11 ausgebildet, wobei diese erste Aufnahmevorrichtung 14 in Fahrtrichtung F gesehen an einer vorderen Längsseite 15 des Achskörpers 13 angeordnet ist. An dieser ersten Aufnahmevorrichtung 14 ist das Zugmodul 10 bzw. eines der Transportmodule 11 verdrehfest angeordnet, so dass eine Relativbewegung in dem Anbindungsbereich zwischen dem Achskörper 13 und dem Zugmodul 10 bzw. dem Transportmodul 11 verhindert ist.

Zusätzlich zu der ersten Aufnahmevorrichtung 14 ist an jedem Achskörper 13 eine zweite Aufnahmevorrichtung 16 angeordnet, an welcher eine gelenkige Anbindung eines Transportmoduls 11 ermöglicht ist. Die zweite Aufnahmevorrichtung ist in Form einer Anhängerkupplung ausgebildet. Durch die gelenkige Anbindung eines Transportmoduls 11 an diese zweite Aufnahmevorrichtung 16 kann erreicht werden, dass das an der zweiten Aufnahmevorrichtung 16 angebundene Transportmodul 11 relativ zu dem Achskörper 13 verschwenkt werden kann, wenn der Routenzug 100 eine Kurvenbahn fährt.

Für die Anbindung eines Transportmoduls 11 an die zweite Aufnahmevorrichtung 16 ist das Transportmodul 11 mit einem Kragarm 17 versehen, welcher unmittelbar an die zweite Aufnahmevorrichtung gelenkig angebunden werden kann.

Die Anbindung des Transportmoduls 11 an die erste Aufnahmevorrichtung 16 erfolgt hingegen ohne einen derartigen Kragarm.

Zur Anbindung des Zugmoduls 10 an die erste Aufnahmevorrichtung 14 weist das Zugmodul 10 einen Kragarm 18 auf, wobei dieser Kragarm 18 fest, insbesondere drehfest, an der ersten Aufnahmevorrichtung 14 angebunden ist. Mit dem Hauptkörper 20 des Zugmoduls 10 ist der Kragarm 18 hingegen gelenkig verbunden.

An den einzelnen Achskörpern 13 der Achsmodule 12 sind jeweils zwei Räder 19 derart gelagert, dass die Räder 19 jeweils um eine vertikal zur Längsachse L des Achskörpers 13 ausgebildete Drehachse D drehbar sind. Bei einer Kurvenfahrt des Routenzuges 100 können dadurch die Räder 19 relativ zu dem Achskörper 13 verschwenkt werden, wie in Fig. 1 dargestellt ist.

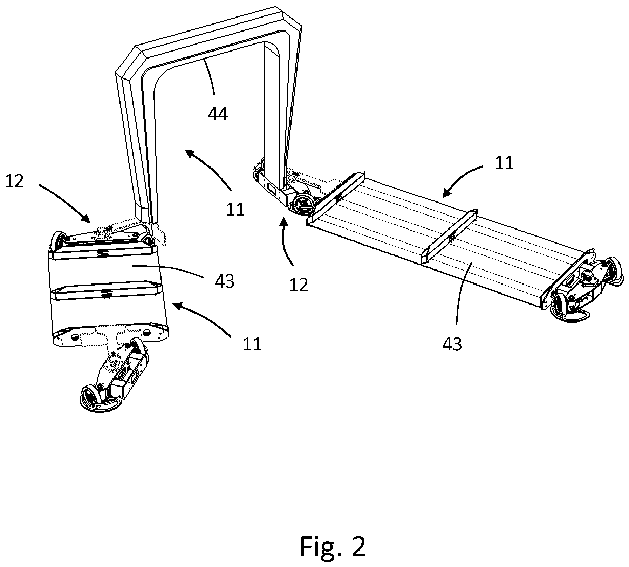

Wie in den nachfolgenden Fig. 2 - 12 gezeigt ist, können die Achsmodule 12 und die Transportmodule 11 unterschiedlich ausgestaltet sein.

Fig. 2 zeigt eine Darstellung, bei welcher die Transportmodule 11 als Module ausgebildet sind, welche eine Auflagefläche 43 aufweisen, oder welche einen Aufnahmebereich 44 aufweisen, in welchem Lasten aufgehangen werden können.

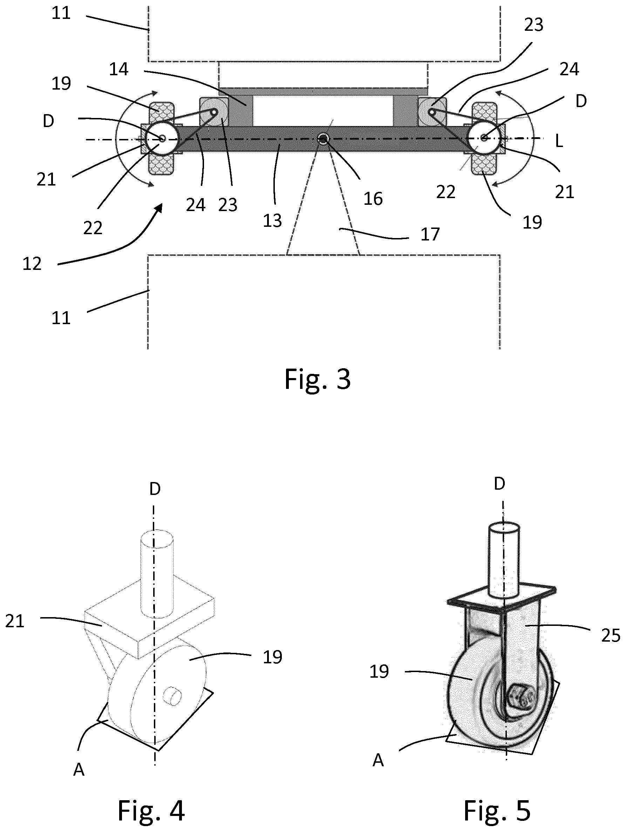

Fig. 3 zeigt eine Ausgestaltung eines Achsmoduls 12, bei welcher die Räder 19 jeweils in einer Einzeldrehschemelaufnahme 21 angeordnet sind, wobei beide Einzeldrehschemelaufnahmen 21 jeweils an dem Achskörper 13 drehbar gelagert sind. Durch die drehbare Lagerung können die Räder 19 relativ zu dem Achskörper 13 verdreht werden. Die Drehachse D der Räder 19, welche senkrecht zur Längsachse L des Achskörpers 13 ausgebildet ist, verläuft dabei unmittelbar durch die Räder 19 und damit durch eine Radaufstandsfläche A der Räder 19.

An den Einzeldrehschemelaufnahmen 21 ist jeweils eine Riemenscheibe 22 angeordnet, wobei die Riemenscheiben 22 jeweils über einen Motor 23, welcher mit der entsprechenden Riemenscheibe 22 über einen Riementrieb 24 verbunden ist, angetrieben werden können. Eine Riemenscheibe 22, ein Motor 23 und ein Riementrieb 24 bilden zusammen einen Lenkantrieb aus, wobei bei der in Fig. 3 gezeigten Ausgestaltung für jede Einzeldrehschemelaufnahme 21 und damit für jedes Rad 19 ein eigener Lenkantrieb in Form einer Riemenscheibe 22, eines Riementriebes 24 und eines Motors 23 vorgesehen ist.

In Fig. 4 ist eine entsprechende Einzeldrehschemelaufnahme 21 mit einem daran angeordneten Rad 19 im Detail gezeigt. Hierbei ist zu erkennen, dass die Drehachse D bei dieser Ausgestaltung innerhalb der Radaufstandsfläche A angeordnet ist und damit mit der Lotrechten der Radaufstandsfläche A zusammenfällt.

Alternativ zu einer Einzeldrehschemelaufnahme 21 können die Räder 19 bei der in Fig. 3 gezeigten Ausgestaltung auch in einer wie in Fig. 5 gezeigten Bockrollenaufnahme 25 angeordnet sein. Auch bei dieser Bockrollenaufnahme 25 ist die Drehachse D innerhalb der Radaufstandsfläche A angeordnet, so dass die Drehachse D mit der Lotrechten der Radaufstandsfläche A zusammenfällt.

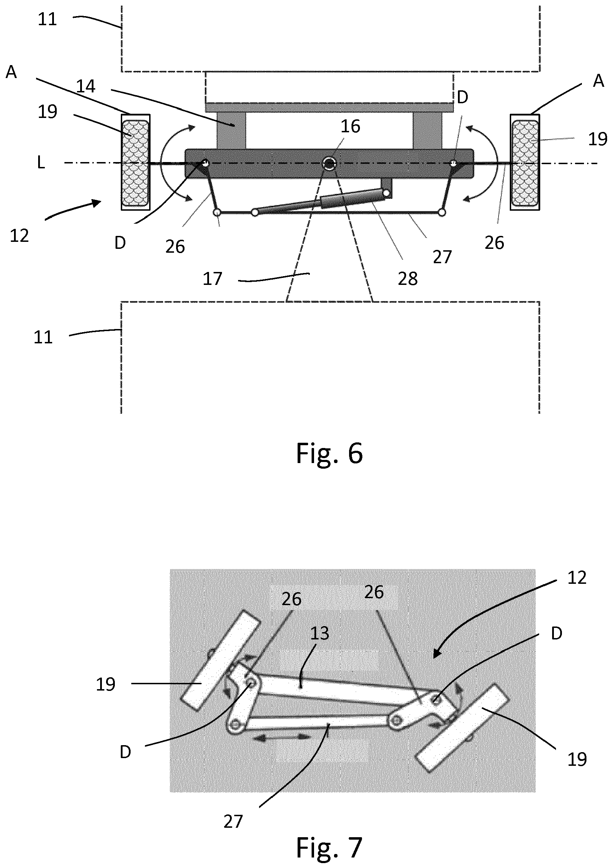

Fig. 6 zeigt eine weitere Ausgestaltung eines Achsmoduls 12, wobei bei dieser Ausgestaltung die Räder 19 jeweils an einem Achsschenkel 26 angeordnet sind, welcher um die Drehachse D drehbar an dem Achskörper 13 gelagert ist. Bei dieser Ausgestaltung ist die Drehachse D des Rades 19 beabstandet zu dem jeweiligen Rad 19 ausgebildet, so dass die Drehachse D außerhalb einer Radaufstandsfläche A des Rades 19 angeordnet ist.

Die Räder 19 sind an den Achsschenkeln 26 drehfest gelagert. Die beiden Achsschenkel 26 sind über eine Verbindungsstange 27 miteinander gekoppelt. Über diese Verbindungsstange erfolgt der Lenkantrieb, indem die Verbindungsstange 27 über einen hydraulischen Zylinder 28 in eine translatorische Bewegung versetzt wird und diese translatorische Bewegung zu einer rotatorischen Bewegung der Achsschenkel 26 umgewandelt bzw. umgesetzt wird. Dies ist insbesondere in Fig. 7 schematisch dargestellt. Durch die rotatorische Bewegung der Achsschenkel 26 erfolgt eine Drehbewegung der Räder 19 relativ zu dem Achskörper 13.

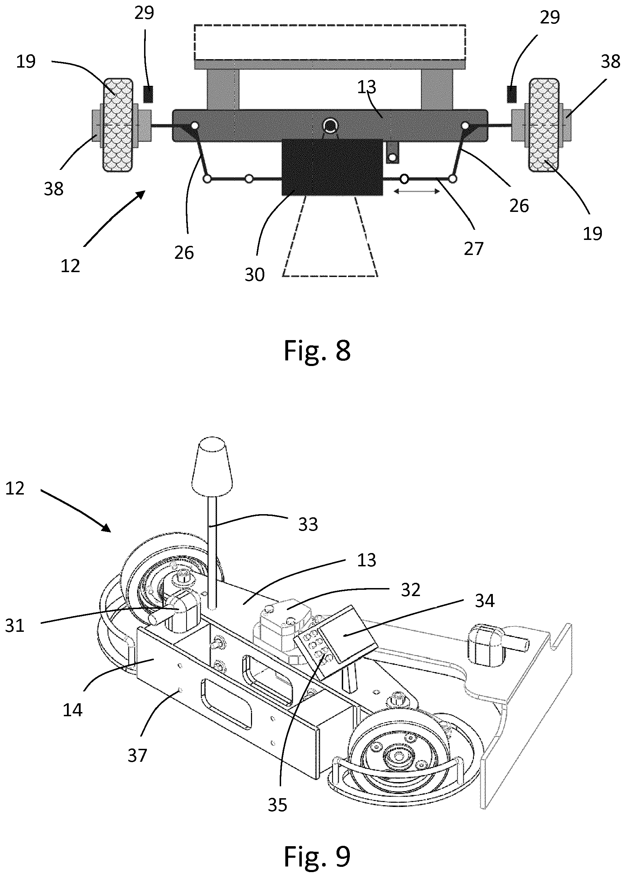

Fig. 8 zeigt eine Ausgestaltung eines Achsmoduls 12, bei welcher Sensoren 29 an dem Achsmodul 13 vorgesehen sind. Die hier gezeigten Sensoren 29 sind als Raddrehzahlsensoren ausgebildet und in der Nähe der Räder 19 positioniert. Ferner ist bei dieser Ausgestaltung kein hydraulischer Zylinder vorgesehen zum Antreiben der Verbindungsstange, sondern ein Motor 30, welcher die Verbindungsstange 27 in eine translatorische Bewegung versetzt, um eine Lenkung der Räder über die Achsschenkel 26 zu erreichen. An dem Motor 30 kann beispielsweise ein weiterer Sensor in Form eines Positionssensors angeordnet sein. Ferner ist bei der in Fig. 8 gezeigten Ausgestaltung an jedem Rad eine eigene Fahrantriebseinrichtung 38 angeordnet, welche hier jeweils als Radnabenmotor mit einem Getriebe ausgebildet ist.

Fig. 9 zeigt eine Ausgestaltung eines Achsmoduls 12, bei welcher an dem Achsmodul 12 eine Anschlussvorrichtung 30 zur Energieversorgung, eine Hubvorrichtung 32, ein optischer und/oder akustischer Signalgeber 33, eine elektronische Anzeigeeinrichtung 34 und eine Eingabevorrichtung 35 angeordnet sind.

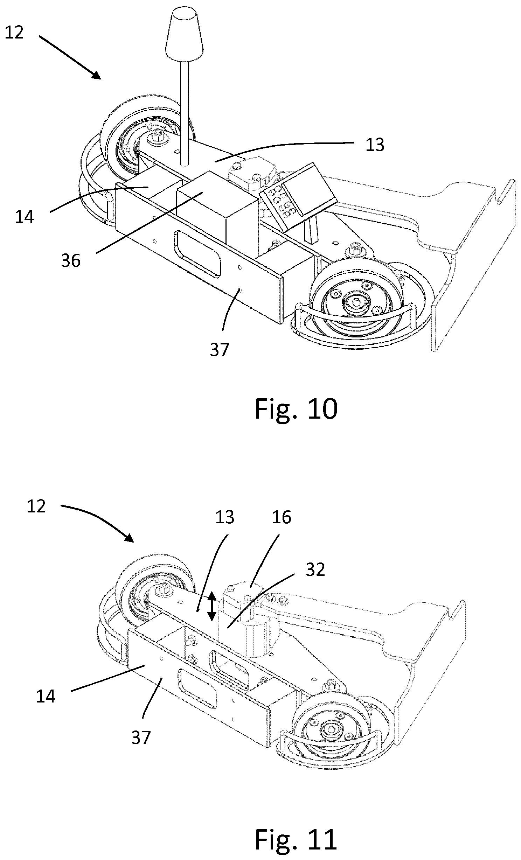

Fig. 10 zeigt eine Ausgestaltung, bei welcher anstelle der Anschlussvorrichtung zur Energieversorgung eine Energiespeichervorrichtung 36 angeordnet ist.

Bei der in Fig. 11 gezeigten Ausgestaltung eines Achsmoduls 12 ist die Hubvorrichtung 32 in einer ausgefahrenen Position gezeigt, bei welcher das an der im Bereich der Hubvorrichtung 32 vorgesehenen zweiten Aufnahmevorrichtung 16 angeordnete Transportmodul 11, hier nicht gezeigt, angehoben ist. Wie in Fig. 11 schematisch durch den Pfeil angedeutet ist, kann die Hubvorrichtung 32 angehoben und abgesenkt werden, um eine Bewegung des an die zweite Aufnahmevorrichtung 16 angebundenen Transportmoduls 11 nach oben und nach unten erreichen zu können.

Wie in den Fig. 9 bis 11 zu erkennen ist, weist die erste Aufnahmevorrichtung 14 Bohrungen 37 auf, über welche ein Transportmodul 11 oder ein Kragarm 18 eines Zugmoduls 10 lösbar mittels Schrauben befestigt werden kann.

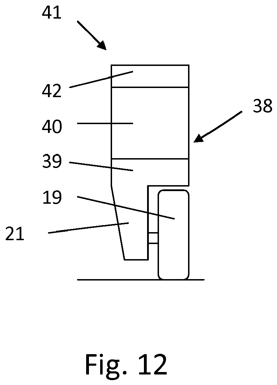

Fig. 12 zeigt eine weitere Ausgestaltung einer Einzeldrehschemelaufnahme 21, bei welcher an der Einzeldrehschemelaufnahme 21 unmittelbar eine Fahrantriebseinrichtung 38 angeordnet ist, welche ein Getriebe 39 und einen Motor 40 umfasst. Zusätzlich ist hierbei an der Einzeldrehschemelaufnahme 21 eine Bremsvorrichtung 41 angeordnet, welche eine dem Rad 19 unmittelbar zugeordnete Bremseinrichtung 42 aufweist.

## Patentansprüche

1. Gleisloser Routenzug (100), mit
einem Zugmodul (10),
mindestens einem Transportmodul (11) und
mindestens zwei Achsmodulen (12),
wobei jedes Achsmodul (12) einen starr ausgebildeten Achskörper (13) aufweist, an welchem eine erste Aufnahmevorrichtung (14) in Form einer Starraufnahme des Zugmoduls (10) oder eines Transportmoduls (11) ausgebildet ist und an welchem eine zweite Aufnahmevorrichtung (16) zur gelenkigen Anbindung eines Transportmoduls (11) ausgebildet ist,
wobei an dem Achskörper (13) mindestens zwei Räder (19) derart gelagert sind, dass die Räder (19) jeweils um eine vertikal zur Längsachse (L) des Achskörpers (13) ausgebildete Drehachse (D) drehbar sind, **dadurch gekennzeichnet, dass** an den Achsmodulen (12) mindestens eine elektronische Lenksteuerungsvorrichtung vorgesehen ist, mittels welcher der aktuelle Bewegungszustand des Achsmoduls (12) und hieraus die von einem Lenkantrieb einzustellenden Lenkwinkel der Räder (19) bestimmbar sind, und wobei die Lenksteuerungsvorrichtung eine Regelungsvorrichtung beinhaltet, mit der ein Lenk- oder mehrere Lenkantriebe des Achsmoduls (12) so geregelt wird/werden, dass sich die zuvor bestimmten Lenkwinkel einstellen.

2. Gleisloser Routenzug (100) nach Anspruch 1, **dadurch gekennzeichnet, dass** die Drehachse (D) des Rades (19) außerhalb oder innerhalb einer Radaufstandsfläche (A) des Rades (19) ausgebildet ist.

3. Gleisloser Routenzug (100) nach Anspruch 1 oder 2, **dadurch gekennzeichnet, dass** die Räder (19) jeweils an einem Achsschenkel (26) angeordnet sind, welcher um die Drehachse (D) drehbar an dem Achskörper (13) gelagert ist.

4. Gleisloser Routenzug (100) nach Anspruch 3, **dadurch gekennzeichnet, dass** die an einem Achskörper (13) gelagerten Achsschenkel (26) einzeln mittels eine Lenkantriebs antreibbar sind oder dass die an einem Achskörper (13) gelagerten Achsschenkel (26) über eine Verbindungsstange (27) miteinander gekoppelt sind und gemeinsam mittels eines Lenkantriebs antreibbar sind.

5. Gleisloser Routenzug (100) nach Anspruch 1 oder 2, **dadurch gekennzeichnet, dass** Räder (19, 20) jeweils in einer Einzeldrehschemelaufnahme (21) oder jeweils in einer Bockrollenaufnahme (25) angeordnet sind, welche an dem Achskörper (13) drehbar gelagert sind.

6. Gleisloser Routenzug (100) nach Anspruch 5, **dadurch gekennzeichnet, dass** die an einem Achskörper (13) gelagerten Einzeldrehschemelaufnahmen (21) oder Bockrollenaufnahmen (25) einzeln mittels eines Lenkantriebs oder gemeinsam mittels eines Lenkantriebs antreibbar sind.

7. Gleisloser Routenzug (100) nach einem der Ansprüche 4 bis 6, **dadurch gekennzeichnet, dass** der Lenkantrieb elektrisch, hydraulisch oder pneumatisch ausgebildet ist.

8. Gleisloser Routenzug (100) nach einem der Ansprüche 1 bis 7, **dadurch gekennzeichnet, dass** an mindestens einem der Achsmodule (12) mindestens ein Sensor (29) angeordnet ist, mittels welchem fahrdynamische Daten des Routenzuges (100) kontinuierlich messbar sind.

9. Gleisloser Routenzug (100) nach einem der Ansprüche 1 bis 8, **dadurch gekennzeichnet, dass** an mindestens einem der Achsmodule (12) mindestens eine über eine elektrische Leitung mit dem Zugmodul (10) verbindbare Anschlussvorrichtung (31) zur Energieversorgung angeordnet ist.

10. Gleisloser Routenzug (100) nach einem der Ansprüche 1 bis 9, **dadurch gekennzeichnet, dass** an mindestens einem der Achsmodule (12) mindestens eine Energiespeichervorrichtung (36) angeordnet ist.

11. Gleisloser Routenzug (100) nach einem der Ansprüche 1 bis 10, **dadurch gekennzeichnet, dass** an mindestens einem der Achsmodule (12) mindestens eine Hubvorrichtung (32) zum Anheben und Senken eines mit dem Achsmodul (12) verbundenen Transportmoduls (11) angeordnet ist.

12. Gleisloser Routenzug (100) nach einem der Ansprüche 1 bis 11, **dadurch gekennzeichnet, dass** an mindestens einem der Achsmodule (12) mindestens ein akustischer und/oder optischer Signalgeber (33) angeordnet ist.

13. Gleisloser Routenzug (100) nach einem der Ansprüche 1 bis 12, **dadurch gekennzeichnet, dass** an mindestens einem der Achsmodule (12) mindestens eine elektronische Anzeigeeinrichtung (34) angeordnet ist.

14. Gleisloser Routenzug (100) nach einem der Ansprüche 1 bis 13, **dadurch gekennzeichnet, dass** an mindestens einem der Achsmodule (12) mindestens eine Eingabevorrichtung (35) angeordnet ist.

15. Gleisloser Routenzug (100) nach einem der Ansprüche 1 bis 14, **dadurch gekennzeichnet, dass** an mindestens einem der Achsmodule (12) mindestens eine Betriebsdatenverarbeitungseinheit angeordnet ist.

16. Gleisloser Routenzug (100) nach einem der Ansprüche 1 bis 15, **dadurch gekennzeichnet, dass** an mindestens einem der Achsmodule (12) eine Bremsvorrichtung (41) angeordnet ist, wobei jedem an dem Achsmodul (12) angeordneten Rad (19) eine eigene Bremseinrichtung (42) der Bremsvorrichtung (41) zugeordnet ist.

17. Gleisloser Routenzug (100) nach einem der Ansprüche 1 bis 16, **dadurch gekennzeichnet, dass** mindestens eines der Achsmodule (12) eine Fahrantriebseinrichtung (38) aufweist.

18. Gleisloser Routenzug (100) nach Anspruch 17, **dadurch gekennzeichnet, dass** jedem Rad (19) eines Achsmoduls (12) eine eigene Fahrantriebseinrichtung (38) zugeordnet ist.

19. Gleisloser Routenzug (100) nach Anspruch 17 oder 18, **dadurch gekennzeichnet, dass** die Fahrantriebseinrichtung mittels einer elektronischen Fahrsteuerungsvorrichtung regelbar und/oder steuerbar ist.

## Claims

1. Railless tugger train (100) with
a train module (10),
at least one transportation module (11) and
at least two axis modules (12),
wherein each axis module (12) has a stiffly configured axis beam (13), at which a first mounting device (14) is configured in the form of a stiff mounting of the train module (10) or a transportation module (11) and at which a second mounting device (16) is configured for an articulated connection of a transportation module (11),
wherein at least two wheels (19) are mounted at the axis beam (13) in such a way that the wheels (19) are each rotatable around a rotation axis (D) which is configured vertical to the longitudinal axis (L) of the axis beam (13), **characterized in that** at least one electronic steering control device is provided at the axis modules (12), by means of which the current state of movement of the axis module (12) and thus the steer angles of the wheels (19) to be adjusted by the steering drive are determinable, and wherein the steering control device includes an adjustment device with which one or several steering drive(s) of the axis module (12) is/are adjusted in such a way that the previously determined steer angles are reached.

2. Railless tugger train (100) according to claim 1, **characterized in that** the rotational axis (D) of the wheel (19) is configured outside or inside a contact surface (A) of the wheel (19).

3. Railless tugger train (100) according to claim 1 or 2, **characterized in that** the wheels (19) are each arranged at a steering knuckle (26) which is rotatable around the rotational axis (D) and is mounted at the axis beam (13).

4. Railless tugger train (100) according to claim 3, **characterized in that** the steering knuckles (26) mounted at an axis beam (13) are individually drivable by means of a steering drive or that the steering knuckles (26) mounted at an axis beam (13) are coupled with each other via a connecting rod (27) and are conjointly drivable by means of a steering drive.

5. Railless tugger train (100) according to claim 1 or 2, **characterized in that** wheels (19, 20) are each arranged in an individual center pivot plate retainer (21) or in a fixed castor retainer (25), which are rotatably mounted at the axis beam (13).

6. Railless tugger train (100) according to claim 5, **characterized in that** the individual center pivot plate retainers (21) or fixed castor retainers (25) mounted at an axis beam (13) are individually drivable by means of a steering drive or conjointly by means of a steering drive.

7. Railless tugger train (100) according to one claims 4 to 6, **characterized in that** the steering drive is configured electrically, hydraulically or pneumatically.

8. Railless tugger train (100) according to one of claims 1 to 7, **characterized in that** at least one sensor (29) is arranged at at least one of the axis modules (12), by means of which data relating to the dynamics of the tugger train (100) movement are continuously measurable.

9. Railless tugger train (100) according to one of claims 1 to 8, **characterized in that** at at least one of the axis modules (12) at least one connecting device (31) connectable to the train module (10) via an electric line is arranged for power supply.

10. Railless tugger train (100) according to one of claims 1 to 9, **characterized in that** at least one energy storage device (36) is arranged at at least one of the axis modules (12).

11. Railless tugger train (100) according to one of claims 1 to 10, **characterized in that** at least one hoisting device (32) for hoisting and lowering a transportation module (11) connected to the axis module (12) is arranged at at least one of the axis modules (12).

12. Railless tugger train (100) according to one of claims 1 to 11, **characterized in that** at least one acoustic and/or optic signal transmitter (33) is arranged at at least one of the axis modules (12).

13. Railless tugger train (100) according to one of claims 1 to 12, **characterized in that** at least one electronic display device (34) is arranged at at least one of the axis modules (12).

14. Railless tugger train (100) according to one of claims 1 to 13, **characterized in that** at least one input device (35) is arranged at at least one of the axis modules (12).

15. Railless tugger train (100) according to one of claims 1 to 14, **characterized in that** at least one operating data processing unit is arranged at at least one of the axis modules (12).

16. Railless tugger train (100) according to one of claims 1 to 15, **characterized in that** a braking device (41) is arranged at at least one of the axis modules (12), wherein an individual brake assembly (42) of the braking device (41) is assigned to each wheel (19) arranged at the axis module (12).

17. Railless tugger train (100) according to one of claims 1 to 16, **characterized in that** at least one of the axis modules (12) has a traction drive device (38).

18. Railless tugger train (100) according to claim 17, **characterized in that** an individual traction drive device (38) is assigned to each wheel (19) of an axis module (12).

19. Railless tugger train (100) according to claim 17 or 18, **characterized in that** the traction drive device is adjustable and/or controllable by means of an electronic drive control device.

## Revendications

1. Train logistique sans usage de rail (100), avec
module de traction (10),
au moins un module de transport (11) et
au moins deux modules d'essieu (12),
sachant que chaque module d'essieu (12) comporte un corps d'essieu (13) constituée rigide, sur lequel est constitué un premier dispositif de logement (14) sous la forme d'un logement rigide du module de traction (10) ou d'un module de transport (11) et sur lequel est constitué un deuxième dispositif de logement (16) pour l'attache articulée d'un module de transport (11),
sachant que sur le corps d'essieu (13) sont logées au moins deux roues (19) de telle manière que les roues (19) peuvent respectivement tourner autour d'un axe de rotation (D) constitué verticalement à l'axe longitudinal (L) du corps d'essieu (13), **caractérisé en ce qu'**au moins un dispositif de commande de direction électronique est prévu sur les modules d'essieu (12) moyen duquel l'état de déplacement réel du module d'essieu (12) et de ce fait les angles de braquage des roues (19) à établir par un entraînement de direction peuvent être déterminés et,
sachant que le dispositif de commande de direction contient un dispositif de réglage avec lequel un ou plusieurs entraînement de direction du module d'essieu (12) est/sont réglé(s) de telle manière que les angles de braquage préalablement déterminés se mettent en place.

2. Train logistique sans usage de rail (100) selon la revendication 1, **caractérisé en ce que** l'axe de rotation (D) de la roue (19) est constitué en dehors ou à l'intérieur d'un plan de roue (A) de la roue (19).

3. Train logistique sans usage de rail (100) selon la revendication 1 ou 2, **caractérisé en ce que** les roues (19) sont respectivement disposées sur une fusée d'essieu (26), laquelle est logée pouvant tourner autour de l'axe de rotation (D) sur le corps d'essieu (13).

4. Train logistique sans usage de rail (100) selon la revendication 3, **caractérisé en ce que** les fusées d'essieu (26) logées sur un corps d'essieu (13) peuvent être entraînées individuellement au moyen d'un entraînement de direction ou **en ce que** les fusées d'essieu (26) logées sur un corps d'essieu (13) sont accouplées l'une à l'autre par le biais d'une tige de liaison (27) et peuvent être entraînées en commun au moyen d'un entraînement de direction.

5. Train logistique sans usage de rail (100) selon la revendication 1 ou 2, **caractérisé en ce que** des roues (19, 20) sont disposées respectivement dans un logement de châssis pivotant individuel (21) ou respectivement dans un logement de roulettes (25), lesquels sont logés pouvant tourner sur le corps d'essieu (13).

6. Train logistique sans usage de rail (100) selon la revendication 5, **caractérisé en ce que** les logements de châssis pivotant individuels (21) ou logements de roulettes (25) logés sur un corps d'essieu (13) peuvent être individuellement entraînés au moyen d'un entraînement de direction ou en commun au moyen d'un entraînement de direction.

7. Train logistique sans usage de rail (100) selon l'une quelconque des revendications 4 à 6, **caractérisé en ce que** l'entraînement de direction est constitué de façon électrique, hydraulique ou pneumatique.

8. Train logistique sans usage de rail (100) selon l'une quelconque des revendications 1 à 7, **caractérisé en ce qu'**au moins un capteur (29) est disposé sur au moins un des modules d'essieu (12) au moyen duquel les données dynamiques de marche du train logistique (100) peuvent être mesurées en continu.

9. Train logistique sans usage de rail (100) selon l'une quelconque des revendications 1 à 8, **caractérisé en ce qu'**au moins un dispositif de raccordement (31) pour l'alimentation en énergie pouvant être relié au module de traction (10) par le biais d'un conducteur électrique est disposé sur au moins un des modules d'essieu (12).

10. Train logistique sans usage de rail (100) selon l'une quelconque des revendications 1 à 9, **caractérisé en ce qu'**au moins un dispositif d'accumulation d'énergie (36) est disposé sur au moins un des modules d'essieu (12).

11. Train logistique sans usage de rail (100) selon l'une quelconque des revendications 1 à 10, **caractérisé en ce qu'**au moins un dispositif de levage (32) pour lever et abaisser un module de transport (11) relié au module d'essieu (12) est disposé sur au moins un des modules d'essieu (12).

12. Train logistique sans usage de rail (100) selon l'une quelconque des revendications 1 à 11, **caractérisé en ce qu'**au moins un émetteur de signal acoustique et/ou optique (33) est disposé sur au moins un des modules d'essieu (12).

13. Train logistique sans usage de rail (100) selon l'une quelconque des revendications 1 à 12, **caractérisé en ce qu'**au moins un système d'affichage électronique (34) est disposé sur au moins un des modules d'essieu (12).

14. Train logistique sans usage de rail (100) selon l'une quelconque des revendications 1 à 13, **caractérisé en ce qu'**au moins un dispositif d'entrée (35) est disposé sur au moins un des modules d'essieu (12).

15. Train logistique sans usage de rail (100) selon l'une quelconque des revendications 1 à 14, **caractérisé en ce qu'**au moins une unité de traitement des données de fonctionnement est disposée sur au moins un des modules d'essieu (12).

16. Train logistique usage de rail (100) selon l'une quelconque des revendications 1 à 15, **caractérisé en ce qu'**au moins un dispositif de freinage (41) est disposé sur au moins un des modules d'essieu (12), sachant qu'un système de freinage (42) propre du dispositif de freinage (41) est attribué à chaque roue (19) disposée sur le module d'essieu (12).

17. Train logistique sans usage de rail (100) selon l'une quelconque des revendications 1 à 16, **caractérisé en ce qu'**au moins un des modules d'essieu (12) comporte un système d'entraînement (38).

18. Train logistique sans usage de rail (100) selon la revendication 17, **caractérisé en ce qu'**un système d'entraînement (38) propre est attribué à chaque roue (19) d'un module d'essieu (12).

19. Train logistique sans usage de rail (100) selon la revendication 17 ou 18, **caractérisé en ce que** le système d'entraînement peut être réglé et/ou commandé au moyen d'un dispositif de commande de marche électronique.
